# EUROPÄISCHE PATENTSCHRIFT

(11) **EP 3 978 826 B1**
(45) Veröffentlichungstag und Bekanntmachung des Hinweises auf die Patenterteilung: **13.11.2024**
(21) Anmeldenummer: 21200878.3
(22) Anmeldetag: 05.10.2021
(51) Int. Cl.: F24S 25/617, E04H 12/22, H02S 20/10, H02S 30/00, F24S 25/12

(54) **PHOTOVOLTAIKANLAGE ZUR VERANKERUNG IM ERDREICH**
PHOTOVOLTAIC DEVICE FOR ANCHORING IN THE GROUND
INSTALLATION PHOTOVOLTAÏQUE À ANCRER DANS LE SOL

(30) Priorität: 05.10.2020 DE 202020105707 U
(43) Veröffentlichungstag der Anmeldung: 06.04.2022
(73) Patentinhaber: FORM-TEC GmbH, 59469 Ense (DE)
(72) Erfinder: Düllmann, Ralf, 59823 Arnsberg (DE)
(74) Vertreter: Andrejewski - Honke Patent- und Rechtsanwälte Partnerschaft mbB

(56) Entgegenhaltungen:
- EP-B2- 2 929 094
- IT-A1- UB20 161 244
- KR-B1- 101 167 687
- US-A- 5 243 795
- US-A- 5 791 635
- US-A1- 2019 136 481
- US-B2- 8 561 361

## Beschreibung

Die Erfindung betrifft eine Photovoltaikanlage zur Verankerung im Erdreich, wobei die Photovoltaikanlage wenigstens ein Solarmodul und eine das Solarmodul tragende Aufständerung aufweist, wobei die Aufständerung wenigstens ein Bein umfasst, wobei das Bein eine Beinachse in Längenrichtung des Beins aufweist, wobei das Solarmodul in einem oberen Bereich des Beins angeordnet ist und mittelbar oder unmittelbar vom Bein getragen wird, wobei das erste Bein einen ersten Schenkel und einen ersten Fuß umfasst, wobei der erste Fuß in einem unteren Bereich des ersten Beins am ersten Schenkel befestigt ist, wobei der erste Fuß wenigstens zwei Hülsen aufweist, wobei das Bein wenigstens zwei Erdspieße umfasst, wobei in den wenigstens zwei Hülsen jeweils einer der Erdspieße aufnehmbar ist bzw. aufgenommen ist, sodass die Erdspieße in unterschiedlichen Richtungen in das Erdreich hineinragen können bzw. hineinragen.

Derartige Photovoltaikanlagen mit metallischen Aufständerungen sind bereits aus EP 2 929 094 B2 bekannt. Deren Hülsen sind als Vierkantrohre mit quadratischem Querschnitt ausgebildet. Die Erdspieße sind im Wesentlichen ebenfalls als Vierkantrohre ausgebildet, weisen jedoch zusätzlich einen Längsschlitz auf, sodass die Erdspieße einen C-förmigen Querschnitt besitzen. Hierdurch verbiegen sich insbesondere die unteren Enden der Erdspieße etwas, wodurch sie mechanischer Spannung ausgesetzt werden. Diese Spannung sorgt für eine stärkere Verankerung im Erdreich dergestalt, dass ein Herausziehen der Erdspieße deutlich kraftaufwendiger wird.

Die Erdspieße aus EP 2 929 094 B2 umfassen ferner mehrere Widerhaken, welche ebenfalls einem Herausziehen der Erdspieße entgegen wirken. Die Widerhaken sind durch Teilausstanzung von Laschen aus der Rohrwand der Erdspieße heraus entstanden, wobei die Laschen nach Ausstanzung leicht nach außen gebogen sind und auf diese Weise die Widerhaken im Erdreich bilden. Ein teilweises Herausziehen aus dem Erdreich mag zwar noch möglich sein - spätestens jedoch beim Kontakt des ersten Widerhakens mit der Hülse ist ein weiteres Herausziehen kaum noch möglich.

In EP 2 929 094 B2 wird auf den Stand der Technik in Form von US 5,791,635 A verwiesen. US 5,791,635 A lehrt einen Zaun, der ein Bein mit daran schräg angeordneten Rundhülsen umfasst. Das Bein ragt in das Erdreich hinein, wobei die Rundhülsen sich vollständig innerhalb des Erdreichs befinden. Ebenso ist je ein Erdspieß durch jede Rundhülse geführt, wobei auch die Erdspieße vollständig unterhalb der Erdoberfläche liegen. Hierdurch werden die Erdspieße vor Vandalismus und Diebstahl gesichert.

In US 8,561,361 B2 ist eine Photovoltaikanlage zur Verankerung im Erdreich offenbart. Die Aufständerung umfasst ein erstes Bein, wobei das Bein einen ersten Schenkel und einen ersten Fuß umfasst. Der Fuß ist in einem unteren Bereich des Beins am Schenkel befestigt. Der Fuß weist insgesamt vier Hülsen auf, in welche jeweils ein Erdspieß aufgenommen ist. Die Erdspieße ragen in unterschiedlichen Richtungen jeweils schräg in das Erdreich hinein, wobei die radialen Außenseiten der Erdspieße wenigstens entlang eines Längenabschnitts einen im Querschnitt vollständigen Umlauf aufweisen. Der Schenkel und der Fuß sind in Höhenrichtung ineinandergeschoben.

Sowohl die mechanische Spannung als auch die Widerhaken sind ausweislich von EP 2 929 094 B2 vorteilhaft gegenüber US 5,791,635 A, weil ein oberer Abschnitt der Erdspieße nicht innerhalb des Erdreichs befindlich ist. Folglich bereitet die Installation der Erdspieße aus EP 2 929 094 B2 gegenüber denen aus US 5,791,635 A weniger Aufwand, weil praktisch keine aufwendigen Erdarbeiten mehr vorgenommen werden müssen. Gleichzeitig sind die Erdspieße aus EP 2 929 094 B2 so gut gesichert, dass sie nur mit größtem Aufwand und letztlich nur in beschädigender bzw. irreversibler Weise aus dem Erdreich geholt werden können.

Nachteilig an Photovoltaikanlagen gemäß EP 2 929 094 B2 ist allerdings, dass diese aufgrund ihrer Bauweise nur für geringere Bauhöhen ausgelegt sind. Insbesondere sind solche Photovoltaikanlagen bzw. Aufständerungen erstrebenswert, welche es erlauben, dass bei Bedarf auch landwirtschaftliche Nutzfahrzeuge, beispielsweise professionelle Aufsitzrasenmäher, Traktoren mit Mähwerk oder sogar Mähdrescher, unter den Solarmodulen entlang fahren können. Hätten die bekannten Photovoltaikanlagen größere Bauhöhen, so müssten diese aufgrund der v.a. an den Solarmodulen angreifenden Kräfte von Windböen aufgrund der Hebelwirkung der langen Beine weitaus stabiler ausgestaltet sein.

Der Erfindung liegt daher die Aufgabe zugrunde, Photovoltaikanlagen so zu ertüchtigen, dass diese auch bei größeren Bauhöhen den angreifenden Kräften von Windböen widerstehen können. Der Erfindung liegt vorzugsweise die Aufgabe zugrunde, den Aufwand bei der Installation der Photovoltaikanlage möglichst gering zu halten.

Diese Aufgabe wird bzw. diese Aufgaben werden gelöst durch eine Photovoltaikanlage zur Verankerung im Erdreich , wobei die Photovoltaikanlage wenigstens ein Solarmodul und eine das Solarmodul tragende Aufständerung aufweist, wobei die Aufständerung ein erstes Bein umfasst, wobei das erste Bein eine Beinachse in Längsrichtung des ersten Beins aufweist, wobei das Solarmodul in einem oberen Bereich des ersten Beins angeordnet ist und mittelbar oder unmittelbar vom ersten Bein getragen wird, wobei das erste Bein einen ersten Schenkel und einen ersten Fuß umfasst, wobei der erste Fuß in einem unteren Bereich des ersten Beins am ersten Schenkel befestigt ist, wobei der erste Fuß wenigstens zwei Hülsen aufweist, wobei das erste Bein wenigstens zwei Erdspieße umfasst, wobei in den wenigstens zwei Hülsen jeweils einer der Erdspieße aufnehmbar bzw. aufgenommen ist, wobei die Erdspieße in unterschiedlichen Richtungen in das Erdreich hineinragen können bzw. hineinragen, wobei die radiale Außenseite der Erdspieße wenigstens entlang eines Längenabschnitts des Erdspießes einen im Querschnitt vollständigen Umlauf aufweist,
wobei der erste Schenkel und der erste Fuß in Höhenrichtung bzw. in Richtung der Beinachse ineinander geschoben sind, wobei der erste Schenkel den ersten Fuß umschließt.

Der Erfindung liegt zunächst die Erkenntnis zugrunde, dass die angreifenden Kräfte bei größeren Bauhöhen nicht nur proportional zur Bauhöhe ansteigen. Vielmehr nimmt auch die Stärke der Windböen mit jedem Höhenmeter zu. Dieser Effekt ist insbesondere auf landwirtschaftlichen Flächen ausgeprägt, weil diese sehr häufig in nur geringem Maße Schutzvegetation aufweisen.

Es wurde gefunden, dass eine Ertüchtigung möglich ist, indem sämtliche Komponenten stärker dimensioniert werden. Dies jedoch führt dazu, dass alle Komponenten deutlich schwerer werden, wodurch die Installation aufwendiger wird. Ebenso können die einzelnen Komponenten durch zusätzliche Elemente, beispielsweise Verstärkungsschienen, ertüchtigt werden. Allerdings verursacht auch diese Maßnahme einen größeren Aufwand.

Es wurde insbesondere gefunden, dass die Struktur der Photovoltaikanlage so verbessert werden kann, dass weder größere Stärken der Komponenten noch Zusatzelemente erforderlich sind. Insbesondere wurde gefunden, dass die Erdspieße kritische Elemente darstellen, wenn starke Windböen auf große Bauhöhen treffen. Die Erdspieße werden in hohem Maße verstärkt, wenn sie wenigstens entlang eines Längenabschnitts einen im Querschnitt vollständigen Umlauf aufweisen. In diesen Fällen liegt entweder ein Erdspieß in Form eines Rohres mit vollständig umlaufender Rohrwandung oder ein massiver Erdspieß vor. Diese Ertüchtigung verursacht praktisch keinerlei zusätzlichen Aufwand, sodass die eingangs genannte Aufgabe bzw. die eingangs genannten Aufgaben gelöst sind. Insbesondere führt die Ertüchtigung dazu, dass die Erdspieße steifer sind und beispielsweise mittels eines Schlagbohrers in das Erdreich getrieben werden können. Dies hat eine besonders aufwandsarme bzw. schnelle Installation zur Folge.

Es ist bevorzugt, dass jede der Hülsen beidenends ein offenes Stirnende aufweist, wobei vorzugsweise eine Hülsenachse als Mittenachse die beiden Stirnenden der jeweiligen Hülse miteinander verbindet. Zweckmäßigerweise sind die Hülsenachsen in einer Seitenansicht bzw. in der Vorderansicht bzw. in der Rückansicht der Photovoltaikanlage schräg zur Beinachse angeordnet. Mit Vorteil verlaufen die wenigstens zwei Hülsenachsen in unterschiedlichen Richtungen.

Der Ausdruck "Vorderansicht" meint insbesondere diejenige Seitenansicht der Photovoltaikanlage, welche aufgrund einer Schrägstellung der Solarmodule einen Blick auf die Oberseite der Solarmodule freigibt. Sofern die Solarmodule sich in einer Waagerechten befinden, mag von vier Seitenansichten die Rede sein. Die Vorderansicht der Photovoltaikanlage definiert eine linke und eine rechte Seite der Photovoltaikanlage.

Das Solarmodul mag eine Vielzahl an Solarzellen aufweisen. Die Photovoltaikanlage kann zwei, drei, vier oder viele Solarmodule aufweisen. In einer Seitenansicht der Photovoltaikanlage mögen die Seiten von einem Solarmodul, zwei, drei oder vier Solarmodulen sichtbar sein. In einer Vorderansicht können praktisch beliebig viele Solarmodule von links nach rechts angeordnet sein. Es ist zweckmäßig, dass die Leserichtung in der Vorderansicht einer Längsrichtung der Photovoltaikanlage entspricht. Ebenso mag die Leserichtung einer Seitenansicht einer Querrichtung der Photovoltaikanlage entsprechen.

Der Ausdruck "die radiale Außenseite der Erdspieße weist wenigstens entlang eines Längenabschnitts des Erdspießes einen im Querschnitt vollständigen Umlauf auf" meint vorzugsweise, dass die Außenseite nicht durch einen Längsschlitz unterbrochen ist. Ein solcher Längsschlitz des Erdspießes ist beispielsweise in EP 2 929 094 B2 offenbart. Auch massiv ausgestaltete Erdspieße besitzen eine Außenseite, welche einen im Querschnitt vollständigen Umlauf aufweist.

Zweckmäßigerweise umfasst die Photovoltaikanlage bzw. die Aufständerung ein zweites Bein. Das zweite Bein mag eine Beinachse in Längsrichtung des zweiten Beins aufweisen. Es ist bevorzugt, dass das Solarmodul oder ein weiteres Solarmodul in einem oberen Bereich des zweiten Beins angeordnet ist und vorzugsweise mittelbar oder unmittelbar vom zweiten Bein getragen wird. Das zweite Bein mag einen zweiten Schenkel und einen zweiten Fuß umfassen, wobei der zweite Fuß vorteilhafterweise in einem unteren Bereich des zweiten Beins am zweiten Schenkel befestigt ist. Der zweite Fuß mag hinsichtlich eines, mehrerer oder aller Merkmale identisch zum ersten Fuß sein. Es liegt im Rahmen der Erfindung, dass der zweite Schenkel kürzer ist als der erste Schenkel. Das zweite Bein vergrößert die Standfestigkeit der Photovoltaikanlage deutlich und mag auch die Dimensionierung der einzelnen Verankerung verringern.

Es ist von großem Vorteil, dass der erste Fuß höchstens 20 cm, vorzugsweise höchstens 10 cm, weiter vorzugsweise höchstens 5 cm und besonders vorzugsweise höchstens 2 cm in das Erdreich hineinragt. Gemäß einer ganz besonders bevorzugten Ausführungsform liegt der erste Fuß mit seinem unteren Ende auf dem Erdreich auf. Es ist sehr bevorzugt, dass der erste Fuß eine solche Aufstellfläche aufweist, welche ein Umkippen des ersten Fußes verhindert.

Vorteilhafterweise sind der zweite Schenkel und der zweite Fuß in Höhenrichtung bzw. in Richtung der Beinachse ineinandergeschoben. Vorzugsweise umschließt der zweite Schenkel den zweiten Fuß. Wenn der jeweilige Schenkel den jeweiligen Fuß umschließt, wird die Verbindung von Schenkel und Fuß vor Korrosion geschützt. Denn dann ist der Spalt zwischen Schenkel und Fuß nicht nach oben hin offen, sodass auch kein Wasser über diesen Weg in den Spalt eindringen kann.

Vorzugsweise sind der erste Schenkel bzw. der zweite Schenkel und der erste Fuß bzw. der zweite Fuß mittels einer bzw. mehrerer Befestigungsstellen, insbesondere Schraubverbindungen, aneinander befestigt. Vorzugsweise umfassen der erste Schenkel bzw. der zweite Schenkel und der erste Fuß bzw. der zweite Fuß Aussparungen für die Schraubverbindungen. Die Aussparungen sind vorteilhafterweise als Stanzlöcher ausgebildet. Die Aussparungen können Kreis- oder Langlöcher und als (Kreis-)Lochreihe ausgebildet sein. Es ist besonders bevorzugt, dass der erste Fuß bzw. der zweite Fuß und der erste Schenkel bzw. der zweite Schenkel zueinander teleskopierbar sind und vorzugweise jeweils eine (Kreis-)Lochreihe in Höhenrichtung aufweisen, wobei die (Kreis-)Lochreihen bevorzugt eine Noniusverbindung ermöglichen. Beispielsweise beträgt der Mittenabstand der (Kreis-)Löcher des ersten Fußes 20 mm, während der Mittenabstand der (Kreis-)Löcher des ersten Schenkels 18 mm beträgt. Dies erlaubt ein Raster an möglichen Höhenpositionen des ersten Schenkels mit einer Auflösung von 2 mm.

Es ist von Vorteil, dass die Befestigungsstellen oberhalb der Hülsen befindlich sind. Vorzugsweise ist ein unteres Ende des ersten Schenkels bzw. des zweiten Schenkels oberhalb der Hülsen angeordnet. Es ist möglich, dass die Schraubverbindungen selbstsichernde Schrauben aufweisen. Der Ausdruck "selbstsichernde Schrauben" meint vorzugsweise Schrauben, die aufgrund ihrer geometrischen Ausgestaltung keine Mutter zur Sicherung benötigen. Insbesondere können die Beine bzw. Schenkel bzw. Füße im Falle der Verwendung von selbstsichernden Schrauben als vollumfängliche Rohre ausgestaltet sein. Denn dann werden keine Montageöffnungen benötigt, um im Inneren des Rohrs einen Schraubenkopf oder eine Mutter während des Anziehens der Schraubverbindung zu fixieren.

Gemäß einer besonders bevorzugten Ausführungsform weist der erste Fuß eine Aufstandsfläche zum senkrechten Aufstellen des ersten Fußes ohne Hilfsmittel auf dem Erdreich auf, wobei untere Enden bzw. Stirnenden der Hülsen die Aufstandsfläche bestimmen bzw. mitbestimmen. Hierdurch wird der Installationsaufwand verringert. Ein Verhältnis aus einer Höhe des ersten Fußes und einer Seitenlänge bzw. eines Durchmessers der Aufstandsfläche beläuft sich vorteilhafterweise auf höchstens 10 bzw. 8 bzw. 6. Es ist bevorzugt, dass ein unteres Ende wenigstens einer der Hülsen höchstens 20 cm, vorzugsweise höchstens 10 cm, weiter vorzugsweise höchstens 5 cm und besonders vorzugsweise höchstens 2 cm von einem unteren Ende des ersten Beins bzw. des ersten Fußes in Richtung der Beinachse entfernt ist. Es ist sehr bevorzugt, dass das untere Ende der wenigstens einen Hülse mit einem unteren Ende des ersten Fußes bzw. des zweiten Fußes fluchtet. Hierdurch wird die Standfestigkeit maximiert. Vorzugsweise ist ein unteres Stirnende der Hülse parallel zu einem unteren Stirnende des ersten Fußes.

Es ist sehr bevorzugt, dass das untere Stirnende der Hülse in der Ebene des unteren Stirnendes des ersten Fußes liegt. Vorzugsweise weicht die Ebene des unteren Stirnendes der Hülse von der Ebene eines Querschnitts der Hülse ab und ist bevorzugt das Ergebnis eines Sägeschrittes schräg zur Hülsenachse. Es ist besonders bevorzugt, dass jede der Hülsen mit Blick auf die ihr zugeordnete Außenseite des ersten Fußes von rechts oben nach links unten oder jede der Hülsen von links oben nach rechts unten verläuft. Es ist sehr bevorzugt, dass an wenigstens zwei bzw. drei Außenseiten und vorzugsweise an allen Außenseiten des ersten Fußes jeweils eine Hülse angeordnet ist. Es ist vorteilhaft, dass eine der Hülsen die ihr zugeordnete Außenseite des ersten Fußes in einer Seitenansicht bzw. Vorder- oder Rückansicht nach links und/oder rechts überragt.

Vorteilhafterweise ist die radiale Außenseite der Erdspieße wenigstens entlang eines Längenabschnitts der Erdspieße im Querschnitt gerundet und insbesondere oval oder kreisförmig ausgebildet. Dies erhöht die Stabilität der Erdspieße. Es ist bevorzugt, dass die radiale Außenseite der Erdspieße wenigstens entlang eines Längenabschnitts in Umfangsrichtung entlang eines vollständigen Umlaufs nach radial außen gewölbt ist, sodass der Erdspieß im Querschnitt beispielsweise oval, kreisförmig, ovalringförmig oder kreisringförmig ausgebildet ist. Die Erdspieße mögen einen Außendurchmesser von wenigstens 2,0 cm, vorzugsweise von wenigstens 2,2 cm und besonders vorzugsweise von wenigstens 2,5 cm aufweisen. Der Außendurchmesser der Erdspieße beträgt vorzugsweise höchstens 6/5/4 cm. Gemäß einer besonders bevorzugten Ausführungsform sind die Erdspieße als Rohr und insbesondere als Rundrohr mit kreisringförmigem Querschnitt ausgebildet. Vorteilhafterweise beteiligt eine Wandstärke des als Rohr ausgebildeten Erdspießes wenigstens 1,2/1,5/1,7 mm. Vorzugsweise beläuft sich die Wandstärke des als Rohr ausgebildeten Erdspießes auf höchstens 4,0/3,5/3,0 mm. Es ist besonders bevorzugt, dass der Querschnitt der Erdspieße über wenigstens 50/70/90/96/99 % der Länge der Erdspieße konstant ist. Die Erdspieße sind vorzugsweise frei von Widerhaken.

Es ist sehr bevorzugt, dass ein oberes Ende des Erdspießes höchstens 5 cm, vorzugsweise höchstens 2 cm und besonders vorzugsweise höchstens 1 cm oberhalb des oberen Endes der Hülse befindlich ist. Hierdurch wird der jeweilige Erdspieß insbesondere vor Diebstahl in der dazugehörigen Hülse gesichert. Gemäß einer ganz besonders bevorzugten Ausführungsform befindet sich das obere Ende des Erdspießes vollständig unterhalb des oberen Endes der Hülse bzw. vollständig innerhalb der Hülse. Vorteilhafterweise ist ein Sicherungselement an einem oberen Ende der Hülse angeordnet. Das Sicherungselement mag beispielsweise eine thermoplastische Polymer-Vergussmasse oder ein Lötmaterial sein. Das Sicherungselement kann aber auch eine Kappe sein, welche mittels Presspassung auf dem oberen Ende der Hülse angeordnet ist. Das Sicherungselement mag vorzugsweise den Aufwand eines Diebstahls der Erdspieße erhöhen.

Es ist besonders vorteilhaft, wenn die wenigstens zwei Erdspieße in einer Draufsicht mit ihrer jeweiligen Spitze in unterschiedliche Richtungen zeigen. Vorzugsweise schließen die Erdspieße in einer Draufsicht zwischeneinander Inklusionswinkel ein, wobei die Inklusionswinkel voneinander um nicht mehr als Faktor 5 bzw. 3 bzw. 2 bzw. 1,5 abweichen. Ein Faktor 3 liegt beispielsweise vor, wenn im Falle von vier Erdspießen zwei Inklusionswinkel 90° betragen, während ein dritter sich auf 45° und ein vierter sich auf 135° beläuft (135/45=3). Eine möglichst vergleichsmäßige Verteilung der Erdspießrichtungen sorgt für eine hohe Stabilität der Verankerung.

Es liegt insbesondere im Rahmen der Erfindung, dass der erste Schenkel ein Profil mit wenigstens drei und vorzugsweise wenigstens vier und besonders vorzugsweise genau vier Biegekanten umfasst. Gemäß einer sehr bevorzugten Ausführungsform weist der erste Schenkel ein gekantetes, C-förmiges oder hohlrechteckförmiges Profil auf. Dann ergibt sich in der Ebene seines Querschnitts vorzugsweise in alle Richtungen ein Formschluss, sodass bei einem innenliegenden ersten Fuß sich der erste Schenkel - vor der Installation der Befestigungsstellen - nur in axialer Richtung bewegen kann. Dies trägt sowohl zur Stabilität des ersten Beins als auch zu einer hohen Installationsgeschwindigkeit bei. Gleiches gilt für den ersten Fuß, wenn dieser den ersten Schenkel umschließt und ein C-förmiges Profil besitzt. Profile mit Biegekanten bieten eine hohe Stabilität bei gleichzeitiger wirtschaftlicher Herstellung. Außerdem wird hierbei der unerwünschte Freiheitsgrad der Rotation zwischen Fuß und Schenkel ausgeschlossen.

Es ist von Vorteil, dass der erste Fuß ein Profilelement ist, wobei der erste Fuß im Querschnitt bevorzugt zwei Randkanten aufweist. Die beiden Randkanten des ersten Fußes mögen einen Längsschlitz des ersten Fußes definieren. Es ist sehr bevorzugt, dass eine der Hülsen in einer Draufsicht die beiden Randkanten überspannt. Zweckmäßigerweise ist der erste Fuß und/oder der erste Schenkel und/oder der Querträger und/oder der Längsträger und/oder der zweite Fuß und/oder der zweite Schenkel ein Profilelement, weiter vorzugsweise ein Profilstahl und besonders vorzugsweise ein walzprofilierter Stahl. Es ist bevorzugt, dass der erste Fuß und/oder der zweite Fuß und/oder der erste Schenkel und/oder der zweite Schenkel als Vierkantrohr oder als U-Profil oder, sehr bevorzugt, als C-Profil ausgebildet sind. Das U-Profil bzw. C-Profil ist vorzugsweise gekantet ausgestaltet. Der Längsträger mag bevorzugt als gekantetes U-Profil ausgebildet sein. Zweckmäßigerweise ist der erste Schenkel zwecks Ineinanderschieben mit dem ersten Fuß komplementär zum ersten Fuß ausgebildet. Der Stahl des ersten Fußes und/oder des ersten Schenkels und/oder Querträgers und/oder das Längsträgers und/oder des zweiten Fußes und/oder des zweiten Schenkels ist vorzugsweise verzinkt oder rostfrei. Wenn der erste Fuß ein C-förmiges Profil besitzt, dann können die Verbindungspunkte, beispielsweise Schweißpunkte, der die Randkanten überspannenden Hülse entsprechend großzügig gestaltet werden, sodass der erste Fuß durch diese Hülse stärker stabilisiert wird.

Vorzugsweise umfasst die Photovoltaikanlage bzw. die Aufständerung wenigstens einen Querträger, wobei der Querträger das erste Bein und das Solarmodul miteinander verbindet, wobei bevorzugt ist, dass eine Längsachse des Querträgers in einer Seitenansicht der Photovoltaikanlage von der Waagerechten abweicht. Vorzugsweise umfasst die Aufständerung eine Vielzahl an zueinander parallel angeordneten Querträgern, welche von einer entsprechenden Vielzahl an ersten Beinen bzw. zweiten Beinen getragen werden. Zweckmäßigerweise ist das Solarmodul oberhalb des Querträgers angeordnet. In einer Seitenansicht der Photovoltaikanlage kann der Querträger einem, zwei, drei oder sogar noch weiteren Solarmodulen zugeordnet sein. Eine untere Kante des Solarmoduls bzw. eine untere Kante des untersten Solarmoduls befindet sich vorzugsweise in wenigstens 75/100/150/200/300 cm Höhe. Der Querträger ist vorzugsweise mit dem zweiten Bein verbunden. Das zweite Bein ist bevorzugt länger oder kürzer als das erste Bein, wodurch vorzugsweise die Neigung des Querträgers bzw. des Solarmoduls bestimmt wird.

Zweckmäßigerweise umfasst die Photovoltaikanlage bzw. die Aufständerung wenigstens einen Längsträger, wobei der Längsträger vorteilhafterweise quer bzw. in der Draufsicht senkrecht zum Querträger angeordnet ist. Die Photovoltaikanlage bzw. Aufständerung kann wenigstens zwei oder drei oder vier Längsträger aufweisen. Es ist bevorzugt, dass der oder die Längsträger das Solarmodul oder die Solarmodule tragen. Es ist bevorzugt, dass der oder die Längsträger zwischen dem Querträger und dem Solarmodul angeordnet ist/sind. Es ist bevorzugt, dass der Längsträger das Solarmodul und den Querträger miteinander verbindet. Vorzugsweise ist eine Längsachse des Längsträgers in einer Vorderansicht der Photovoltaikanlage waagerecht ausgerichtet. Quer- und Längsträger dienen vor allem der bruchsicheren Halterung der Solarmodule.

Es ist sehr bevorzugt, dass die Erdspieße wenigstens 40/50/60/70 cm lang sind. Die Erdspieße sind zweckmäßigerweise höchstens 150/120/100/90 cm lang. Es ist bevorzugt, dass die Erdspieße wenigstens 20 cm, vorzugsweise wenigstens 25 cm und besonders vorzugsweise wenigstens 30 cm in Richtung der Beinachse in das Erdreich hineinragen können bzw. hineinragen. Ein Einschlusswinkel α zwischen den Hülsenachsen bzw. Erdspießachsen und der Beinachse mag wenigstens 5°/10°/15° betragen. Vorzugsweise beläuft sich der Einschlusswinkel α auf höchstens 70°/65°/60°. Die schräge Führung der Erdspieße ermöglicht eine besonders widerstandsfeste Verankerung. Es ist bevorzugt, dass die Hülsen und der jeweils dazugehörige Erdspieß zueinander ein Spiel in Radialrichtung aufweisen. Das Spiel zwischen Hülsen und Erdspießen beläuft sich auf wenigstens 0,5/0,7 mm. Das Spiel zwischen Hülsen und Erdspießen in radialer Richtung mag vorzugsweise höchstens 2,0/1,5 mm betragen.

Es ist möglich, dass die Erdspieße ein sich verjüngendes, unteres Ende zum leichteren Eindringen ins Erdreich aufweisen. Die Erdspieße können ein verstärktes, oberes Ende aufweisen. Das verstärkte, obere Ende weist vorzugsweise denselben Außenquerschnitt wie ein mittlerer und/oder unterer Längenabschnitt des Erdspießes auf. Beispielsweise ist das obere Ende des Erdspießes massiv ausgebildet, sodass eine Erhöhung der Widerstandsfähigkeit während der Kraftaufbringung bei der Einführung ins Erdreich erzielt wird.

Wenn die, vorzugsweise sich schräg in die Tiefe erstreckenden, Erdspieße in senkrechter Richtung gemessen höchstens 100 cm bzw. 80 cm bzw. 60 cm bzw. 50 cm bzw. 40 cm tief in das Erdreich ragen, dann kommt die Photovoltaikanlage für besonders viele Anwendungen in Betracht. Als Beispiel mögen ehemalige Deponien genannt sein, welche oft nur eine relativ dünne Erdschicht oberhalb der Deponieversiegelung aufweisen. Mit Vorteil ist der erste Fuß wenigstens 20 cm, vorzugsweise wenigstens 30 cm und weiter vorzugsweise wenigstens 35 cm hoch. Der erste Fuß mag eine Höhe von höchstens 120/100/80 cm aufweisen. Eine Wandstärke des ersten Fußes mag sich auf wenigstens 1,5/2,0/2,5 mm belaufen. Die Wandstärke des ersten Fußes beträgt höchstens 6,0/5,0/4,0 mm. Eine erste Kantenlänge des ersten Fußes mag sich im Querschnitt auf wenigstens 5,0/6,0/7,0 cm belaufen. Vorteilhafterweise beträgt die erste Kantenlänge des ersten Fußes im Querschnitt höchstens 20/16/12 cm. Eine zweite Kantenlänge des ersten Fußes mag sich im Querschnitt auf wenigstens 2,0/3,0/3,5 cm belaufen. Die zweite Kantenlänge beträgt höchstens 10/8/6 cm. Es ist bevorzugt, dass der erste Fuß ein C-Profil mit einem Längsschlitz aufweist. Eine Schlitzbreite des Längsschlitzes mag sich auf wenigstens 15/20/25 % der ersten Kantenlänge belaufen. Die Schlitzbreite des Längsschlitzes beträgt vorzugsweise höchstens 60/50/40 % der ersten Kantenlänge.

Nachfolgend wird ein Ausführungsbeispiel der Erfindung anhand von fünf Figuren erläutert. Es zeigen in schematischer Darstellung
- Fig. 1: eine Seitenansicht einer erfindungsgemäßen Photovoltaikanlage,
- Fig. 2: eine Seitenansicht eines erfindungsgemäßen ersten Fußes der Photovoltaikanlage aus Fig. 1,
- Fig. 3: eine Vorderansicht des ersten Fußes aus Fig. 2,
- Fig. 4: eine perspektivische Ansicht des ersten Fußes aus den Figuren 2 und 3 und
- Fig. 5: einen Querschnitt des Fußes aus den Figuren 2 bis 4.

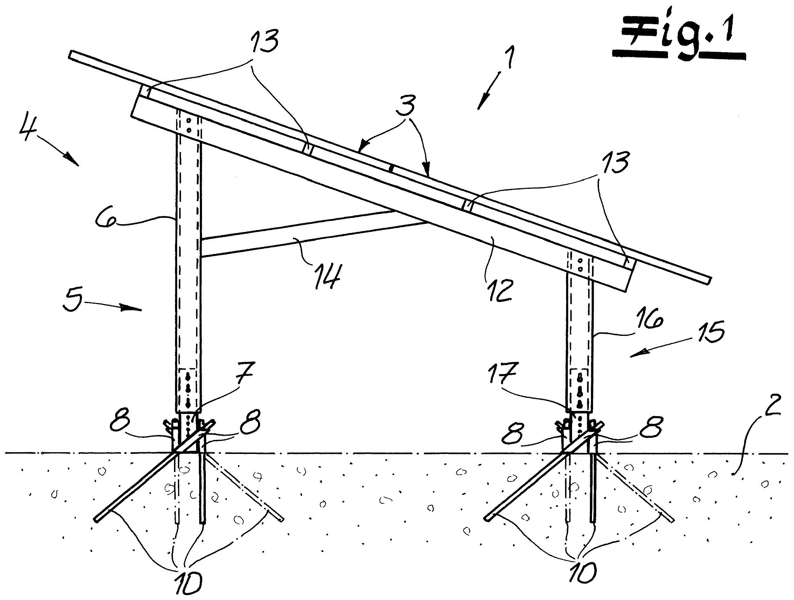

In Fig. 1 ist eine erfindungsgemäße Photovoltaikanlage 1 abgebildet, welche eine Aufständerung 4 sowie Solarmodule 3 umfasst. Die Aufständerung 4 dieses Ausführungsbeispiels weist ein erstes Bein 5, ein zweites Bein 15 sowie einen Querträger 12 auf. Der Querträger 12 mag über Schraubverbindungen mit dem ersten Bein 5 und dem zweiten Bein 15 verbunden sein. Vorzugsweise befinden sich auf dem Querträger 12 in die bildliche Tiefe reichende Längsträger 13, auf welchen ihrerseits die Solarmodule 3 angeordnet sind. Eine Schrägstütze 14 verbindet vorteilhafterweise das erste Bein 5 mit dem Querträger 12 und steift die Aufständerung 4 aus.

Die Photovoltaikanlage 1 kann praktisch beliebige Längen in Tiefenrichtung und damit in Richtung der Perspektive aus Fig. 1 annehmen. Hierzu werden in regelmäßigen Abständen, beispielsweise alle drei Meter, weitere erste Beine 5 und zweite Beine 15 mitsamt weiteren Schrägstützen 14 sowie Querträgern 12 angeordnet. Dann können die Längsträger 13 ihrerseits praktisch beliebig verlängert und mit entsprechend vielen Solarmodulen 3 bestückt werden.

Im Falle des Ausführungsbeispiels nach Fig. 1 weisen das erste Bein 5 und das zweite Bein 15 einen ersten Schenkel 6 und einen ersten Fuß 7 bzw. einen zweiten Schenkel 16 und ein zweiten Fuß 17 auf. Vorzugsweise unterscheiden sich der erste Schenkel 6 und der zweite Schenkel 16 im Wesentlichen hinsichtlich ihrer Länge, wodurch eine Schrägstellung des Querträgers 12 und damit letztlich auch eine Schrägstellung der Solarmodule 3 erreicht wird. Vorteilhafterweise ist die Schrägstellung der Solarmodule 3 nach Süden ausgerichtet.

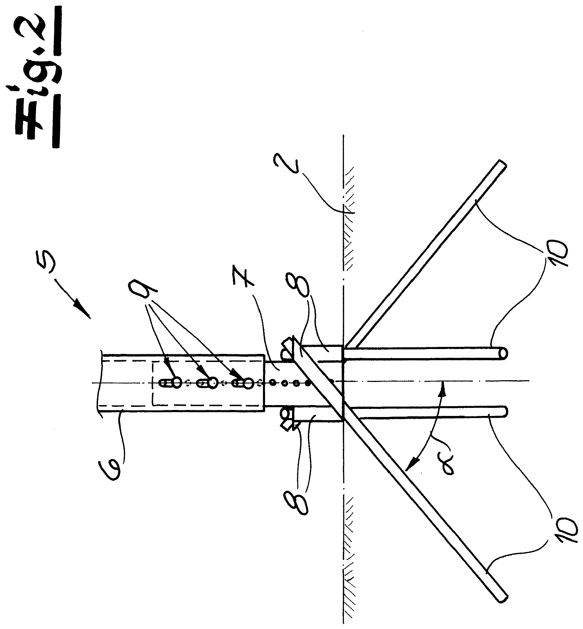

Demgegenüber sind der erste Fuß 7 und der zweite Fuß 17 in diesem Ausführungsbeispiel im Wesentlichen identisch ausgebildet und in den Figuren 2 bis 4 dargestellt. Fig. 2 zeigt den ersten Fuß 7 sowie einen unteren Bereich des ersten Schenkels 6 in derselben Seitenansicht wie im Falle von Fig. 1. Vorzugsweise besitzt der erste Fuß 7 eine Lochreihe, welche aus ausgestanzten, kreisförmigen Löchern besteht. Der erste Schenkel 6 mag ein hierzu korrespondierendes, ebenfalls ausgestanztes Langloch aufweisen. Beispielsweise mittels drei Schrauben können drei Schraubverbindungen bzw. Befestigungsstellen 9 realisiert werden, wodurch der erste Schenkel 6 und der erste Fuß 7 fest miteinander verbunden sind.

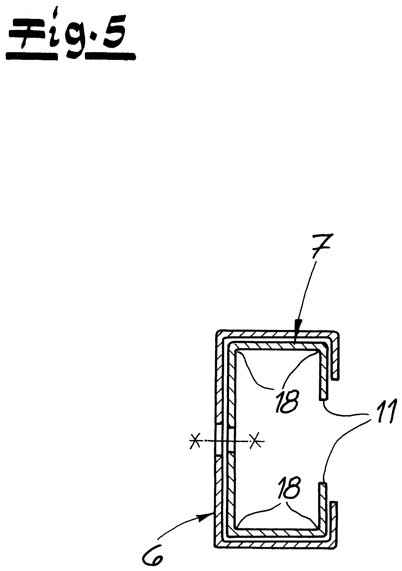

Der Fig. 2 und insbesondere auch der Fig. 5 ist zu entnehmen, dass der erste Schenkel 6 den ersten Fuß 7 umschließt. Hierdurch ummantelt der von oben kommende erste Schenkel 6 den ersten Fuß 7, sodass nur wenig Feuchtigkeit in den Spalt zwischen dem ersten Schenkel 6 und dem ersten Fuß 7 eintreten kann. Würde hingegen der erste Fuß 7 den ersten Schenkel 6 umschließen, so entstünde ein nach oben hin offener Spalt zwischen dem ersten Fuß 7 und dem ersten Schenkel 6, in welchen sehr viel Niederschlags- bzw. Kondenswasser eintreten würde. Dies würde insbesondere den unteren Bereich des ersten Beins 5 aufgrund von Korrosion mit der Zeit empfindlich schwächen.

Gemäß Fig. 2 sind in einem unteren Bereich des ersten Fußes 7 insgesamt vier Hülsen 8 angeordnet. Die Hülsen 8 dieses Ausführungsbeispiels weisen den Querschnitt eines Rundrohrs auf und sind vorzugsweise an beiden Enden angeschrägt. Es ist vorteilhaft, dass die unteren Enden der Hülsen 8 mit einem unteren Ende des Fußes 7 fluchten, wodurch die Aufstandsfläche auf dem Erdreich 2 vergrößert wird. Die oberen Enden der Hülsen 8 können ebenfalls angeschrägt sein, weil für diesen Sägeschritt der Einfachheit halber dieselbe Säge wie für die unteren Enden der Hülsen 8 verwendet wird. Die Hülsen mögen einen Innendurchmesser von 30 mm bei einer Wandstärke von 2 mm aufweisen. Vorteilhafterweise umfassen die Hülsen 8 einen Stahl und weiter vorzugsweise einen hochfesten Stahl. Die Hülsen 8 sind, wie vorzugsweise alle Komponenten der Aufständerung 4 dieses Ausführungsbeispiels, zwecks Korrosionsbeständigkeit verzinkt.

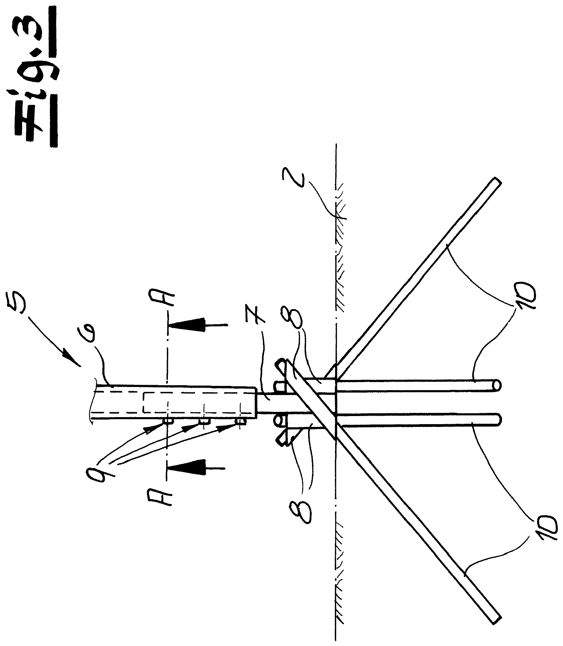

Die Hülsen 8 sind vorteilhafterweise mit dem ersten Fuß 7 verschweißt, wobei die Schweißnähte Verbindungspunkte zwischen den Hülsen 8 und dem ersten Fuß 7 darstellen. Die Hülsen 8 überragen bevorzugt sowohl in einer Seitenansicht nach Fig. 2 als auch in der Vorder- sowie Rückansicht der Photovoltaikanlage nach Fig. 3 den ersten Fuß 7 nach links und nach rechts. Die Hülsen 8 dieses Ausführungsbeispiels erstrecken sich von rechts oben nach links unten.

Jede der Hülsen 8 hat gemäß Fig. 2 einen Erdspieß 10 aufgenommen, wobei jeder Erdspieß 10 beispielsweise mit einem Schlaghammer in das Erdreich 2 getrieben wurde. Die Erdspieße 10 mögen eine Länge von 74 cm aufweisen und ihrerseits als Rundrohre ausgebildet sein. Die Erdspieße 10 dieses Ausführungsbeispiels haben einen Innendurchmesser von 25 mm bei einer Wandstärke von 2 mm, sodass sich ein Außendurchmesser von 29 mm ergibt. Im Ergebnis sind die Hülse 8 und der Erdspieß 10 dieses Ausführungsbeispiels so gewählt, dass ein Spiel von 1 mm in radialer Richtung vorliegt.

Die Hülsen 8 dieses Ausführungsbeispiels sind so ausgerichtet, dass sie zwischen sich und der Beinachse einen Einschlusswinkel α einschließen, welcher 50° betragen mag. Demzufolge schließen auch die Erdspieße 10 zwischen sich und der Beinachse den Einschlusswinkel α ein, wie dies in Fig. 2 am besten ersichtlich ist. Da alle Hülsen 8 in ihrer jeweils zugeordneten Perspektive (Hülse stets zwischen dem Betrachter und dem ersten Fuß 7) von rechts oben nach links unten verlaufen, spannen die beiden jeweils einander gegenüberliegenden Erdspieße 10 mit ihren jeweiligen unteren Enden einen Abstand von rund 90 cm zueinander auf, was für eine entsprechende Verankerung in Erdreich 2 sorgt.

Aufgrund der Länge der Erdspieße 10 dieses Ausführungsbeispieles sind diese mit der Hand praktisch nicht mehr aus dem Erdreich 2 herausziehbar. Hier kommt allenfalls noch der Einsatz von entsprechendem Werkzeug in Betracht, um die Erdspieße 10 wieder aus dem Erdreich 2 herauszuholen. Um die Erdspieße 10 vor einem derartigen Diebstahl zu schützen, ist es daher besonders vorteilhaft, die Erdspieße 10 weitestgehend in die Hülsen 8 hineinzutreiben. Gemäß der in Fig. 2 gezeigten Ausführungsform sind die Erdspieße 10 bereits dann sehr gut gesichert, wenn nur noch eine obere Ecke der Erdspieße 10 aus den Hülsen 8 herausragt. Eine noch weitergehende Sicherung der Erdspieße wird erreicht, wenn das obere Ende der Erdspieße 10 vollständig innerhalb der Hülse 8 verschwindet, was zusätzlich noch durch thermoplastische Vergussmassen oder gar durch Verlötung abgesichert werden kann.

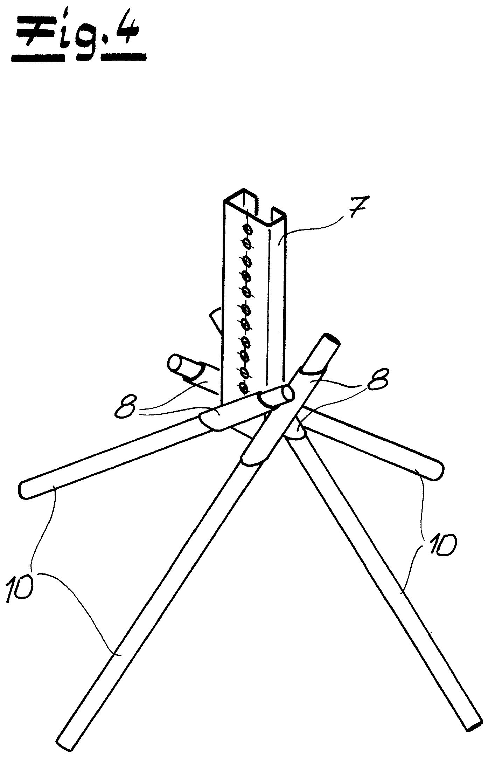

In Fig. 3 ist eine Vorderansicht des ersten Fußes 7 mitsamt den Hülsen 8, den Erdspießen 10 und dem unteren Bereich des ersten Schenkels 6 abgebildet. Demzufolge sind die Kantenlängen der Querschnitte vom ersten Fuß 7 und vom ersten Schenkel 6 deutlich kürzer als diejenigen Kantenlängen, welche in Fig. 2 erkennbar sind. Die beiden Erdspieße 10, die in Fig. 2 noch schräg dargestellt sind, sind aufgrund des Perspektivwechsels in Fig. 3 nunmehr parallel zur Beinachse abgebildet. Bei den beiden anderen Erdspießen 10 verhält es sich genau umgekehrt. Fig. 4 verdeutlicht, dass die Erdspieße 10 aus den Figuren 2 und 3 gewissermaßen helixförmig in das Erdreich 2 getrieben wurden.

An der Stelle der beiden Pfeile in Fig. 3 ist außerdem die Position des Querschnitts A-A visualisiert, welcher in Fig. 5 dargestellt ist. Demzufolge sind sowohl der erste Fuß 7 als auch der erste Schenkel 6 dieses Ausführungsbeispiels C-förmige, walzprofilierte Stahlbleche mit einer Stärke von 3 mm. Der erste Fuß 7 umfasst vorzugsweise vier Biegekanten 18, welche dem ersten Fuß 7 seine Rechteckform verleihen. Zwei Randkanten 11 mögen einen Längsschlitz des ersten Fußes 7 definieren. In einem weiter unten liegenden Bereich des ersten Fußes 7 überspannt vorzugsweise einer der Erdspieße 10 den Längsschlitz des ersten Fußes 7 und erhöht die Stabilität des ersten Beins 5 beträchtlich. Dies gilt umso mehr, als dass der untere Bereich des ersten Fußes 7 in statischer Hinsicht als Gelenk zu betrachten ist. Auch die anderen Hülsen 8 verstärken den ersten Fuß 7 in seinem unteren Bereich. Darüber hinaus verstärkt der erste Schenkel 6 einen oberen Bereich des ersten Fußes 7.

### Bezugszeichenliste:

- 1: Photovoltaikanlage
- 2: Erdreich
- 3: Solarmodul
- 4: Aufständerung
- 5: erstes Bein
- 6: erster Schenkel
- 7: erster Fuß
- 8: Hülse
- 9: Befestigungsstelle
- 10: Erdspieß
- 11: Randkante
- 12: Querträger
- 13: Längsträger
- 14: Schrägstütze
- 15: zweites Bein
- 16: zweiter Schenkel
- 17: zweiter Fuß
- 18: Biegekante

## Patentansprüche

1. Photovoltaikanlage (1) zur Verankerung im Erdreich (2), wobei die Photovoltaikanlage (1) wenigstens ein Solarmodul (3) und eine das Solarmodul (3) tragende Aufständerung (4) aufweist, wobei die Aufständerung (4) ein erstes Bein (5) umfasst, wobei das erste Bein (5) eine Beinachse in Längsrichtung des ersten Beins (5) aufweist, wobei das Solarmodul (3) in einem oberen Bereich des ersten Beins (5) angeordnet ist und mittelbar oder unmittelbar vom ersten Bein (5) getragen wird,
wobei das erste Bein (5) einen ersten Schenkel (6) und einen ersten Fuß (7) umfasst, wobei der erste Fuß (7) in einem unteren Bereich des ersten Beins (5) am ersten Schenkel (6) befestigt ist, wobei der erste Fuß (7) wenigstens zwei Hülsen (8) aufweist, wobei das erste Bein (5) wenigstens zwei Erdspieße (10) umfasst, wobei in den wenigstens zwei Hülsen (8) jeweils einer der Erdspieße (10) aufnehmbar bzw. aufgenommen ist, wobei die Erdspieße (10) in unterschiedlichen Richtungen in das Erdreich (2) hineinragen können bzw. hineinragen, wobei die radiale Außenseite der Erdspieße (10) wenigstens entlang eines Längenabschnitts des Erdspießes (10) einen im Querschnitt vollständigen Umlauf aufweist,
**dadurch gekennzeichnet, dass**
der erste Schenkel (6) und der erste Fuß (7) in Höhenrichtung bzw. in Richtung der Beinachse ineinander geschoben sind, wobei der erste Schenkel (6) den ersten Fuß (7) umschließt.

2. Photovoltaikanlage (1) nach Anspruch 1, wobei der erste Fuß (7) höchstens 20 cm, vorzugsweise höchstens 10 cm, weiter vorzugsweise höchstens 5 cm und besonders vorzugsweise höchstens 2 cm in das Erdreich hineinragt.

3. Photovoltaikanlage (1) nach einem der Ansprüche 1 oder 2, wobei der erste Fuß (7) eine Aufstandsfläche zum senkrechten Aufstellen des ersten Fußes (7) ohne Hilfsmittel auf dem Erdreich (2) aufweist, wobei vorzugsweise untere Enden der Hülsen (8) die Aufstandsfläche des ersten Fußes (7) bestimmen bzw. mitbestimmen.

4. Photovoltaikanlage (1) nach einem der Ansprüche 1 bis 3, wobei die radiale Außenseite der Erdspieße (10) wenigstens entlang eines Längenabschnitts der Erdspieße (10) im Querschnitt gerundet, insbesondere oval oder kreisförmig, ausgebildet ist.

5. Photovoltaikanlage (1) nach einem der Ansprüche 1 bis 4, wobei ein oberes Ende des Erdspießes (10) höchstens 5 cm, vorzugsweise höchstens 2 cm und besonders vorzugsweise höchstens 1 cm oberhalb des oberen Endes der Hülse (8) befindlich ist.

6. Photovoltaikanlage (1) nach einem der Ansprüche 1 bis 5, wobei die wenigstens zwei Erdspieße (10) in einer Draufsicht mit ihrer jeweiligen Spitze in unterschiedliche Richtungen zeigen.

7. Photovoltaikanlage (1) nach einem der Ansprüche 1 bis 6, wobei der erste Fuß (7) ein Profilelement ist, wobei der erste Fuß (7) im Querschnitt bevorzugt zwei Randkanten (11) aufweist, wobei vorzugsweise eine der Hülsen (8) in einer Draufsicht die beiden Randkanten (11) überspannt.

8. Photovoltaikanlage (1) nach einem der Ansprüche 1 bis 7, wobei der erste Fuß (7) und der erste Schenkel (6) zueinander teleskopierbar sind und vorzugsweise jeweils eine (Kreis-)Lochreihe in Höhenrichtung aufweisen, wobei bevorzugt ist, dass die (Kreis-)Lochreihen eine Noniusverbindung ermöglichen.

9. Photovoltaikanlage (1) nach einem der Ansprüche 1 bis 8, wobei die, vorzugsweise sich schräg in die Tiefe erstreckenden, Erdspieße (10) in senkrechter Richtung gemessen höchstens 80 cm bzw. 60 cm bzw. 50 cm tief in das Erdreich (2) hineinragen.

## Claims

1. A photovoltaic plant (1) for anchoring in the ground (2), wherein the photovoltaic plant (1) has at least one solar module (3) and one mounting frame (4) carrying the solar module (3), wherein the mounting frame (4) comprises a first leg (5), wherein the first leg (5) has a leg axis in the longitudinal direction of the first leg (5), wherein the solar module (3) is arranged in an upper region of the first leg (5) and is supported indirectly or directly by the first leg (5),
wherein the first leg (5) comprises a first upper leg section (6) and a first base (7), wherein the first base (7) is fastened to the first upper leg section (6) in a lower region of the first leg (5), wherein the first base (7) has at least two sleeves (8), wherein the first leg (5) comprises at least two earth spikes (10), wherein in each case one of the earth spikes (10) can be or is accommodated in the at least two sleeves (8), wherein the earth spikes (10) can protrude or protrude into the ground (2) in different directions, wherein the radial outer side of the earth spikes (10) has a complete circumference in cross section at least along one longitudinal section of the earth spike (10),
**characterized in that**
the first upper leg section (6) and the first base (7) are pushed into one another in the height direction or in the direction of the leg axis, wherein the first upper leg section (6) encloses the first base (7).

2. The photovoltaic plant (1) according to Claim 1, wherein the first base (7) protrudes at most 20 cm, preferably at most 10 cm, further preferably at most 5 cm and particularly preferably at most 2 cm into the ground.

3. The photovoltaic plant (1) according to either of Claims 1 and 2, wherein the first base (7) has a contact area for placing the first base (7) vertically on the ground (2) without aids, wherein lower ends of the sleeves (8) preferably determine or contribute to the contact area of the first base (7).

4. The photovoltaic plant (1) according to one of the Claims 1 to 3, wherein the radial outer side of the earth spikes (10) is designed to be rounded in cross section, particularly oval or circular, at least along a longitudinal section of the earth spikes (10).

5. The photovoltaic plant (1) according to one of Claims 1 to 4, wherein an upper end of the earth spike (10) is located at most 5 cm, preferably at most 2 cm and particularly preferably at most 1 cm above the upper end of the sleeve (8).

6. The photovoltaic plant (1) according to one of Claims 1 to 5, wherein, in a plan view, the respective tips of the at least two earth spikes (10) point in different directions.

7. The photovoltaic plant (1) according to one of Claims 1 to 6, wherein the first base (7) is a profile element, wherein the first base (7) preferably has two outer edges (11) in cross section, wherein, in a plan view, one of the sleeves (8) preferably covers both of the outer edges (11).

8. The photovoltaic plant (1) according to one of Claims 1 to 7, wherein the first base (7) and the first upper leg section (6) are telescopic with respect to one another and in each case preferably have a row of (circular) holes in the height direction, wherein it is preferred that the rows of (circular) holes allow a Nonius connection.

9. The photovoltaic plant (1) according to one of Claims 1 to 8, wherein the earth spikes (10), which preferably extend obliquely downwards, protrude to a depth of at most 80 cm or 60 cm or 50 cm into the ground (2) as measured in the vertical direction.

## Revendications

1. Installation photovoltaïque (1), destinée à être ancrée dans un terrain (2), l'installation photovoltaïque (1) comportant au moins un module solaire (3) et une structure élevée (4) portant le module solaire (3), la structure élevée (4) comprenant une première jambe (5), la première jambe (5) comportant un axe de jambe dans la direction longitudinale de la première jambe (5), le module solaire (3) étant placé dans une zone supérieure de la première jambe (5) et étant porté indirectement ou directement par la première jambe (5),
la première jambe (5) comprenant une première branche (6) et un premier pied (7), le premier pied (7) étant fixé dans une zone inférieure de la première jambe (5), sur la première branche (6), le premier pied (7) comportant au moins deux manchons (8), la première jambe (5) comprenant au moins deux piquets de potentiel (10), dans les au moins deux manchons (8) étant réceptionné ou susceptible d'être réceptionné chaque fois l'un des piquets de potentiel (10), les piquets de potentiel (10) pouvant saillir ou saillant dans différentes directions dans le terrain (2), la face extérieure radiale des piquets de potentiel (10) présentant au moins le long d'une section longitudinale du piquet de potentiel (10) une section transversale à circulation totale,
**caractérisée en ce que**
la première branche (6) et le premier pied (7) sont emboîtés l'un dans l'autre dans la direction de la hauteur ou dans la direction de l'axe de jambe, la première branche (6) entourant le premier pied (7).

2. Installation photovoltaïque (1) selon la revendication 1, le premier pied (7) saillant d'un maximum de 20 cm, de préférence d'un maximum de 10 cm, de préférence par ailleurs d'un maximum de 5 cm et de manière particulièrement préférentielle, d'un maximum de 2 cm dans le terrain.

3. Installation photovoltaïque (1) selon l'une quelconque des revendications 1 ou 2, le premier pied (7) présentant une surface de support pour la pose verticale du premier pied (7) sans moyen auxiliaire sur le terrain (2), de préférence des extrémités inférieures des manchons (8) déterminant ou co-déterminant la surface de support du premier pied (7).

4. Installation photovoltaïque (1) selon l'une quelconque des revendications 1 à 3, la face extérieure radiale des piquets de potentiel (10) étant conçus au moins le long d'une section longitudinale des piquets de potentiel (10) avec une section transversale arrondie, notamment ovale ou circulaire.

5. Installation photovoltaïque (1) selon l'une quelconque des revendications 1 à 4, une extrémité supérieure du piquet de potentiel (10) se situant d'un maximum de 5 cm, de préférence d'un maximum de 2 cm et de manière particulièrement préférentielle, d'un maximum de 1 cm au-dessus de l'extrémité supérieure du manchon (8).

6. Installation photovoltaïque (1) selon l'une quelconque des revendications 1 à 5, vus en élévation, les au moins deux piquets de potentiel (10) montrant dans différentes directions par leur pointe respective.

7. Installation photovoltaïque (1) selon l'une quelconque des revendications 1 à 6, le premier pied (7) étant un élément profilé, le premier pied (7) comportant dans sa section transversale de préférence deux arêtes marginales (11), de préférence l'un des manchons (8) enjambant les deux arêtes marginales (11) dans une vue en élévation.

8. Installation photovoltaïque (1) selon l'une quelconque des revendications 1 à 7, le premier pied (7) et la première branche (6) étant télescopables l'un par rapport à l'autre et comportant de préférence chacun dans la direction de la hauteur une rangée de trous (circulaires) de préférence, les rangées de trous (circulaires) permettant un raccordement Nonius.

9. Installation photovoltaïque (1) selon l'une quelconque des revendications 1 à 8, mesurés dans la direction verticale, les piquets de potentiel (10) qui s'étendent de préférence en oblique dans la profondeur saillant d'un maximum d'une profondeur de 80 cm ou de 60 cm ou de 50 cm dans le terrain (2).
